# FASCICULE DE BREVET EUROPEEN

(11) **EP 3 478 759 B1**
(45) Date de publication et mention de la délivrance du brevet: **05.08.2020**
(21) Numéro de dépôt: 17740450.6
(22) Date de dépôt: 29.06.2017
(51) Int. Cl.: C08L 9/00, B60C 1/00, C08K 5/18, C08L 9/04, C08L 9/06

(54) **COMPOSITION DE CAOUTCHOUC COMPRENANT UNE RÉSINE EPOXYDE ET UN DURCISSEUR AMINE SPÉCIFIQUE**
LATEX ZUSAMMENSETZUNG ENTHALTEND EIN EPOXIDHARZ UND EINEN SPEZIELLEN AMINHÄRTER
RUBBER COMPOSITION COMPRISING AN EPOXIDIZED RESIN AND A SPECIFIC AMINE HARDENER

(30) Priorité: 30.06.2016 FR 1656142
(43) Date de publication de la demande: 08.05.2019
(73) Titulaire: Compagnie Générale des Etablissements Michelin, 63000 Clermont-Ferrand (FR)
(72) Inventeur: LANDREAU, Emmanuel, 63040 Clermont-Ferrand Cedex 9 (FR); LAUBRY, Philippe, 63040 Clermont-Ferrand Cedex 9 (FR)
(74) Mandataire: Louret, Sylvain
(86) Numéro de dépôt international: PCT/FR2017/051749
(87) Numéro de publication internationale: WO 2018/002538

(56) Documents cités:
- WO-A1-2014/016346

## Description

La présente invention est relative aux compositions de caoutchouc destinées notamment à la fabrication de pneumatiques ou de produits semi-finis pour pneumatiques, en particulier des compositions de caoutchouc présentant une rigidité élevée.

Il est connu d'utiliser dans certaines parties des pneumatiques, des compositions de caoutchouc présentant une forte rigidité lors de faibles déformations du pneumatique comme présenté dans la demande WO 02/10269. La résistance aux faibles déformations est une des propriétés que doit présenter un pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du pneumatique.

Les résines renforçantes classiquement utilisées pour augmenter la rigidité des compositions sont des résines renforçantes à base d'un système accepteur/donneur de méthylène. Les termes « accepteur de méthylène » et « donneur de méthylène » sont bien connus de l'homme du métier et largement utilisés pour désigner des composés aptes à réagir ensemble pour générer par condensation une résine renforçante tridimensionnelle qui vient se superposer, s'interpénétrer avec le réseau charge renforçante/élastomère d'une part, avec le réseau élastomère/soufre d'autre part (si l'agent de réticulation est le soufre). A l'accepteur de méthylène précédemment décrit est associé un agent durcisseur, apte à le réticuler ou durcir, encore appelé communément « donneur de méthylène ». La réticulation de la résine est alors provoquée lors de la cuisson de la matrice de caoutchouc, par formation de ponts méthylène entre les carbones en positions ortho et para des noyaux phénoliques de la résine et le donneur de méthylène, créant ainsi un réseau de résine tridimensionnel.

Classiquement, l'accepteur de méthylène est une résine phénolique. Des résines phénoliques novolaques, ont déjà été décrites dans des compositions de caoutchouc, notamment destinées à des pneumatiques ou des bandes de roulement de pneumatiques, pour des applications aussi variées qu'adhésion ou renforcement : on se reportera par exemple au brevet EP 0 649 446. Par ailleurs, les donneurs de méthylène classiquement utilisés sont de l'hexa-méthylènetétramine (en abrégé HMT), ou l'hexaméthoxyméthylmélamine (en abrégé HMMM ou H3M), ou l'hexaéthoxyméthylmélamine.

Toutefois, la combinaison d'une résine phénolique, accepteur de méthylène avec l'HMT ou l'H3M donneur de méthylène, produit du formaldéhyde au cours de la vulcanisation de la composition de caoutchouc. Or, il est souhaitable de diminuer, voire de supprimer à terme le formaldéhyde des compositions de caoutchouc en raison de l'impact environnemental potentiel de ces composés.

A cet effet, des compositions alternatives aux compositions comprenant le couple résine formo-phénolique accepteur de méthylène avec un durcisseur HMT ou H3M donneur de méthylène classiques ont été développées. A titre d'exemple, la demande WO 2011/045342 décrit des compositions comprenant une couple résine époxyde avec un durcisseur aminé. Ces compositions, outre l'avantage de s'affranchir de la formation de formaldéhyde, présentent après réticulation des rigidités supérieures aux compositions conventionnelles tout en conservant une résistance au roulement acceptable. Toutefois, il est toujours souhaitable d'améliorer les propriétés à cru de ces compositions, notamment leur processabilité, de manière à faciliter la production de ces compositions et ainsi réduire les coûts globaux de production, tout en maintenant un bon niveau de rigidité.

### Exposé de l'invention

De manière inattendue, la Demanderesse a découvert lors de ses recherches que le choix d'un durcisseur aminé particulier avec une résine époxyde permet d'améliorer la processabilité des compositions de caoutchouc avant cuisson (à cru), notamment le temps de grillage ou la viscosité de ces compositions, par rapport aux compositions utilisées à ce jour. Ainsi, les compositions conformes à la présente invention présentent un compromis processabilité / rigidité bien supérieur à celui des compositions connues.

En conséquence, un premier objet de l'invention concerne une composition de caoutchouc à base d'au moins :
- un élastomère diénique ;
- une charge renforçante ;
- un système de réticulation ;
- entre 1 et 30 parties en poids pour cent parties en poids d'élastomère, pce, d'une résine époxyde ;
- entre 1 et 15 pce d'un durcisseur aminé comprenant au moins deux fonctions amines primaires situées sur au moins un cycle aromatique à six atomes, ledit au moins un cycle aromatique à six atomes comportant :
   ∘ au moins une fonction amine primaire, et
   ∘ au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
   de telle sorte que l'au moins un cycle aromatique à six atomes ne comprenne pas d'atome d'hydrogène situé en position ortho par rapport aux fonctions amines primaires,
ledit durcisseur aminé comprenant au moins une deuxième fonction amine primaire située sur ledit au moins un cycle aromatique à six atomes ou sur un éventuel second cycle aromatique à six atomes dudit durcisseur aminé.

L'invention a également pour objet des articles en caoutchouc finis ou semi-finis pour pneumatiques et des pneumatiques comportant une composition de caoutchouc conforme à l'invention, ainsi qu'un procédé de préparation de la composition selon l'invention.

L'invention ainsi que ses avantages seront aisément compris à la lumière de la description et des exemples de réalisation qui suivent.

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts soufrés (polysulfures, disulfures, mono-sulfure).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Matrice élastomérique

La composition du pneumatique de l'invention peut contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3 -butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

En résumé, l'élastomère diénique de la composition peut être choisi, par exemple, dans le groupe des élastomères diéniques fortement insaturés constitué par le caoutchouc naturel (NR), les polyisoprènes (IR) de synthèse, les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode de réalisation préférentiel particulier, l'élastomère diénique est un élastomère majoritairement isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle IIR), d'isoprène-styrène (SIR), d'isoprène-butadiène (BIR) ou d'isoprène-butadiène-styrène (SBIR).

L'élastomère diénique est de préférence choisi dans le groupe constitué par le caoutchouc naturel, les polyisoprènes de synthèse et leurs mélanges. Parmi ces polyisoprènes de synthèse, sont utilisés de préférence des polyisoprènes ayant un taux (% molaire) de liaisons cis 1,4 supérieur à 90%, plus préférentiellement encore supérieur à 98%. De préférence encore, l'élastomère diénique est du caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elles contiennent un seul élastomère diénique ou un mélange de plusieurs élastomères diéniques, les compositions de l'invention peuvent être utilisées en association avec tout type d'élastomère synthétique autre que diénique, voire avec des polymères autres que des élastomères, par exemple des polymères thermoplastiques.

### Charge renforçante

La composition du pneumatique selon l'invention comprend avantageusement une charge renforçante, connue pour ses capacités à renforcer une composition de caoutchouc utilisable pour la fabrication de pneumatiques.

La charge renforçante peut comprendre du noir de carbone, une charge organique autre que le noir de carbone, une charge inorganique ou le mélange d'au moins deux de ces charges. Préférentiellement, la charge renforçante peut comprendre du noir de carbone, une charge inorganique renforçante, de préférence de la silice, ou un mélange de noir de carbone et de charge inorganique renforçante, de préférence de la silice. Plus préférentiellement encore la charge renforçante comprend majoritairement, voire exclusivement, du noir de carbone, en particulier dans le cas où la composition est utilisée dans une couche interne. La charge renforçante peut également comprendre majoritairement une charge inorganique renforçante, en particulier dans le cas où la composition est utilisée dans une bande de roulement.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, en ce qui concerne la silice, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 12 pce, plus préférentiellement compris dans un domaine allant de 4 à 8 pce. Ce taux est aisément ajusté par l'homme du métier selon le taux de charge inorganique utilisé dans la composition.

Selon l'invention, lorsque la charge renforçante est présente, le taux de charge renforçante, de préférence la charge renforçante comprenant majoritairement, voire exclusivement du noir de carbone, peut être compris dans un domaine allant de 20 à 200, de préférence de 30 à 150 pce, de préférence de 40 à 100 pce, de préférence de 50 à 80 pce.

### Résine époxyde

La composition selon l'invention comprend entre 1 et 30 pce d'une résine époxyde.

Les résines époxydes utilisables dans la présente invention incluent tous les composés polyépoxydes. Il peut s'agir par exemple des résines époxydes aromatiques, époxydes alicycliques, et époxydes aliphatiques. Par exemple, la résine époxyde aromatique peut être une résine époxyde amine-aromatique. Ces résines sont préférentiellement des résines époxydes novolaques, c'est-à-dire des résines époxydes obtenues par catalyse acide, par opposition aux résines résols, obtenus par catalyse basique.

En particulier parmi les composés époxydes aromatiques, sont préférées les résines époxydes choisies dans le groupe constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et le mélanges de ces composés

De préférence encore, la résine époxyde est choisie dans le groupe constitué par le poly[o-crésylglycidyl éther)-co-formaldéhyde], le poly[o-phénylglycidyl éther)-co-formaldéhyde], les résines époxyde amine aromatique et le mélanges de ces composés.

A titre d'exemple de résines époxydes disponibles dans le commerce et utilisables dans le cadre de la présente invention, on peut citer par exemple la résine époxyde « DEN 439 » de la société Uniqema, la résine époxyde « Tris(4-hydroxyphenyl)methane triglycidyl ether » de la société Sigma-Aldrich, la résine époxy crésol novolaque araldite ECN 1299 de la société Hunstman.

La quantité de résine époxyde est comprise entre 1 et 30 pce. Compte tenu du durcisseur aminé utilisé dans le cadre de la présente invention, en dessous du taux minimum de résine indiqué, l'effet technique visé est insuffisant, alors qu'au-delà du maximum indiqué, on s'expose à des risques d'augmentation trop importante de la rigidité et de pénalisation excessive de l'hystérèse et de la plasticité Mooney. Pour toutes ces raisons, le taux de résine époxyde est comprise entre 10 et 25 pce. De préférence encore, le taux de résine dans la composition selon l'invention est compris entre 15 et 20 pce.

### Durcisseur aminé

La résine époxyde de la composition de l'invention est associée à un durcisseur aminé particulier qui permet la réticulation de la résine.

Selon l'invention, le durcisseur aminé comprend au moins deux fonctions amines primaires situées sur au moins (c'est-à-dire un ou plusieurs) un cycle aromatique à six atomes, ledit au moins un cycle aromatique à six atomes comportant :
∘ au moins une fonction amine primaire, et
∘ au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de telle sorte que l'au moins un cycle aromatique à six atomes ne comprenne pas d'atome d'hydrogène situé en position ortho par rapport aux fonctions amines primaires,
ledit durcisseur aminé comprenant au moins une deuxième fonction amine primaire située sur ledit au moins un cycle aromatique à six atomes ou sur un éventuel second cycle aromatique à six atomes dudit durcisseur aminé.

En d'autres termes, le durcisseur aminé comprend un ou plusieurs cycles aromatiques à six atomes et au moins deux fonctions amines primaires situées sur un seul ou répartis sur plusieurs de ces cycles aromatiques à six atomes.

De manière bien connue de l'homme du métier, on entend par fonction amine primaire une fonction aminée dans laquelle l'atome d'azote est lié à deux atomes d'hydrogène.

De préférence, le durcisseur aminé comprend de 1 à 3, de préférence encore 1 ou 2 cycles aromatiques à six atomes.

De préférence, le durcisseur aminé comprend de 2 à 4, de préférence encore 2 fonctions amines primaires situées sur au moins cycle aromatique à six atome du durcisseur aminé.

Parmi les halogènes susceptibles de constituer les radicaux Ri, on peut citer les atomes de fluor, de chlore, de brome ou d'iode. De préférence, les halogènes sont choisis dans le groupe constitué par les atomes de chlore et de brome, de préférence encore les halogènes sont des atomes de chlore.

Selon un premier mode de réalisation de la présente invention, le durcisseur aminé peut comprendre un cycle aromatique à six atomes comportant :
o au moins deux fonctions amines primaire, et
o au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de sorte que ledit cycle ne comprenne pas d'atome d'hydrogène situé en position ortho par rapport aux fonctions amines primaires.

Selon un deuxième mode de réalisation de la présente invention, le durcisseur aminé peut également comprendre au moins deux cycles aromatiques à six atomes, identiques ou différents, lesdits cycles comportant chacun :
o au moins une fonction amine primaire, et
o au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de telle sorte que lesdits cycles ne comprennent pas d'atome d'hydrogène situé en position ortho par rapport aux fonctions amines primaires.

Selon un autre mode de réalisation, le durcisseur aminé peut également comprendre plusieurs cycles aromatiques à six atomes et au moins deux fonctions amines primaires situés uniquement sur l'un des cycles aromatiques.

Lorsque le durcisseur aminé comprend plusieurs (c'est-à-dire au moins deux) cycles aromatiques à six atomes, ces cycles peuvent être identiques ou différents. Ils peuvent par exemple différer les uns des autres par la nature des atomes constituant lesdits cycles et/ou par le nombre de fonctions amines primaires situées sur lesdits cycles et/ou par la nature et/ou le nombre des radicaux Ri disposés sur lesdits cycles et/ou par la position des fonctions amines primaires et radicaux Ri sur lesdits cycles. De préférence, lorsque le durcisseur aminé comprend plusieurs cycles aromatiques à six atomes, ces cycles sont identiques.

Comme indiqué ci-dessus, le durcisseur aminé comprend au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6. Dans l'expression « les éthers, les amines tertiaires, les thio-éthers, les cétones, les esters et les amides, substitués par des radicaux alkyles linéaires ou ramifiés en C1-C6 », l'homme du métier comprend bien que les termes « substitués par des radicaux alkyles linéaires ou ramifiés en C1-C6 » se rapportent à chacun des éthers, amines tertiaires, thio-éthers, cétones, esters et amides.

Quel que soit le mode de réalisation de la présente invention, le durcisseur aminé comprend préférentiellement au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, substitués par des radicaux alkyles linéaires ou ramifiés en C1-C6. De préférence encore le durcisseur aminé comprend au moins deux radicaux Ri, identiques ou différents, choisis dans le groupe constitué par les radicaux alkyles linéaires ou ramifiés en C1-C6, les halogènes, et les thio-éthers substitués par des radicaux alkyles linéaires ou ramifiés en C1-C6.

Quel que soit le mode de réalisation de la présente invention, les radicaux Ri, identiques ou différents, sont choisis dans le groupe constitué par les radicaux alkyles linéaires ou ramifiés en C1-C6. En d'autres termes, tous les radicaux Ri du durcisseur aminé peuvent être des radicaux alkyles linéaires ou ramifiés en C1-C6, les radicaux alkyles linéaires ou ramifiés en C1-C6 étant de préférence choisis dans le groupe constitué par les radicaux méthyle, éthyle et propyle.

Quel que soit le mode de réalisation de la présente invention, l'au moins un cycle aromatique à six atomes du durcisseur aminé peut comprendre au moins deux radicaux Ri, identiques ou différents, choisis dans le groupe constitué par les halogènes, et les éthers, les amines tertiaires et les thio-éthers, substitués par des radicaux alkyles linéaires ou ramifiés en C1-C6, et au moins un radical Ri choisi dans le groupe constitué par les radicaux alkyles linéaires ou ramifiés en C1-C6.

Quel que soit le mode de réalisation de la présente invention, qu'il s'agisse des radicaux Ri, ou des radicaux des éthers, amines tertiaires, thio-éthers, cétones, esters ou amides, les radicaux alkyles linéaires ou ramifiés en C1-C6 peuvent être choisis dans le groupe constitué par les radicaux méthyle, éthyle, propyle, isopropyle, isobutyle et butyle. De préférence, les radicaux alkyles linéaires ou ramifiés en C1-C6 sont choisis dans le groupe constitué par les radicaux méthyle, éthyle et propyle. De préférence encore, les radicaux alkyles linéaires ou ramifiés en C1-C6 sont choisis dans le groupe constitué par les radicaux méthyle et éthyle.

Quel que soit le mode de réalisation de la présente invention, les atomes des cycles aromatiques à du durcisseur aminé peuvent être des atomes de carbone, et éventuellement comprendre des atomes d'azote. De préférence, tous les atomes des cycles aromatiques du durcisseur aminé sont des atomes de carbone. En d'autres termes, les cycles aromatiques à six atomes du durcisseur aminé sont préférentiellement des cycles aromatiques à six atomes de carbone.

Dans les formules (I) à (V) présentées ci-après, il est rappelé que les radicaux Ri peuvent être identiques ou différents.

Selon le premier mode de réalisation de la présente invention, le durcisseur aminé peut répond à la formule (I) :

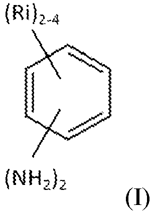

De préférence, selon ce mode de réalisation, le durcisseur aminé répond à la formule (II) :

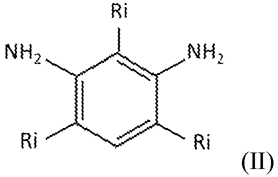

Selon le deuxième mode de réalisation de la présente invention, le durcisseur aminé peut également répond à la formule (III) : 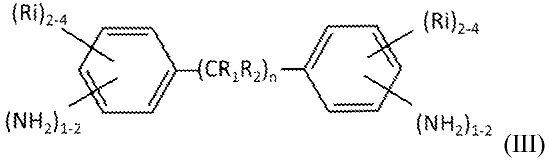 dans laquelle
n représente un entier allant de 0 à 4, de préférence de 1 à 3,
R1 et R2, identiques ou différents, sont choisis dans le groupe constitué par un atome d'hydrogène et un groupement méthyle, éthyle, isobutyle ou benzyle, de préférence R1 et R2 représentent tous les deux un atome d'hydrogène.

De préférence, selon ce mode de réalisation, le durcisseur aminé répond à la formule (IV) : 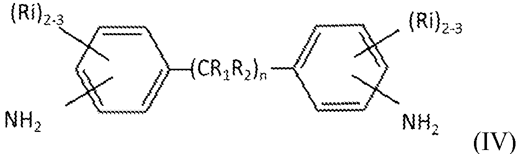 dans laquelle
n représente 1 ou 2, de préférence 1,
R1 et R2, identiques ou différents, sont choisis dans le groupe constitué par un atome d'hydrogène, un groupement méthyle, éthyle, isobutyle ou benzyle, de préférence R1 et R2 représentent tous les deux un atome d'hydrogène.

De préférence encore, selon ce mode de réalisation, le durcisseur aminé répond à la formule (V) :

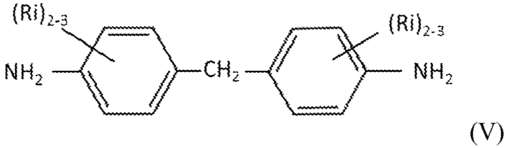

Très préférentiellement, selon l'invention, le durcisseur aminé est choisi dans le groupe constitué par les composés ci-dessous et les mélanges de ces composés :

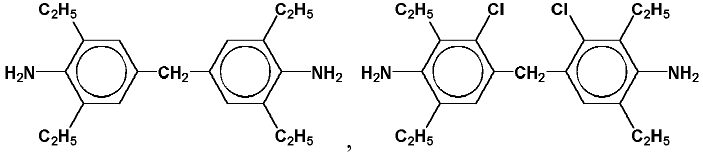

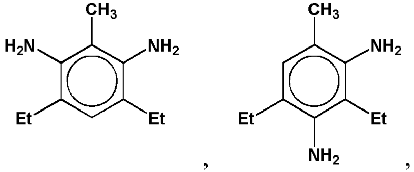

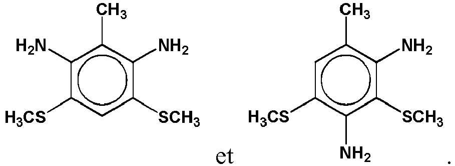

A titre d'exemple de durcisseurs aminés disponibles dans le commerce et utilisables dans le cadre de la présente invention, on peut citer par exemple l'« Ethacure 100 » ou l'« Ethacure 300 de la société Albemarle, le « Lonzacure DETDA », le « Lonzacure MDEA » ou le « Lonzacure MCDEA » de la société Lonza.

La quantité de durcisseur aminé est comprise entre 1 et 15 pce. En dessous du minimum indiqué, l'effet technique visé s'est révélé insuffisant, alors qu'au-delà du maximum indiqué, on s'expose à des risques de pénalisation de la mise en œuvre à l'état cru des compositions. Avantageusement, le taux de durcisseur aminé est compris dans un domaine allant de 5 à 10 pce, de préférence de 2 à 8 pce.

### Additifs divers

Les compositions de caoutchouc conformes à l'invention peuvent également comporter tout ou partie des additifs usuels habituellement utilisés dans les compositions d'élastomères, comme par exemple des pigments, des agents de protection tels que cires anti-ozone, anti-ozonants chimiques, anti-oxydants, agents plastifiants, des agents anti-fatigue, des résines renforçantes, un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Lorsque la composition selon l'invention est une composition de couche interne de pneumatique, elle est avantageusement dépourvue d'agent anti-oxydant.

Lorsque la composition selon l'invention est une composition de couche interne de pneumatique, elle peut être dépourvue d'agent plastifiant ou en contenir moins de 5 pce, de préférence moins de 1 pce. De manière alternative et selon un mode de réalisation également préférentiel, la composition du pneumatique selon l'invention comporte en outre un agent plastifiant. De préférence cet agent plastifiant est une résine hydrocarbonée solide (ou résine plastifiante), une huile d'extension (ou huile plastifiante), ou un mélange des deux.

Par ailleurs, la composition du pneumatique selon l'invention peut comprendre un sel de cobalt, en particulier dans le cas où elle est utilisée dans une couche interne. La Demanderesse a en outre constaté de manière surprenante que les durcisseurs aminés comprend au moins un cycle aromatique à six atomes comportant au moins un radical Ri choisi dans le groupe constitué par les halogènes, et les éthers, les amines tertiaires, les thio-éthers, les cétones, les esters et les amides, substitués par des radicaux alkyles linéaires ou ramifiés en C1-C6, sont particulièrement efficaces dans des compositions comprenant un sel de cobalt. Ainsi, de préférence, la composition selon l'invention comprend un sel de cobalt et un durcisseur aminé comportant au moins un radical Ri choisi dans le groupe constitué par les halogènes, et les éthers, les amines tertiaires, les thio-éthers, les cétones, les esters et les amides, substitués par des radicaux alkyles linéaires ou ramifiés en C1-C6. Le sel de cobalt peut être choisi, par exemple, dans le groupe constitué par les abiétates, les acétylacétonates, les tallates, les naphténates, les résinâtes et les mélanges de ces composés. Le taux en sel de cobalt peut être par exemple, compris entre 0,1 et 6 pce, par exemple entre 0,3 et 4 pce, par exemple entre 0,5 et 2,5 pce.

Avantageusement, la composition selon l'invention comprend un système de réticulation. Le système de réticulation est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 10,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### Pneumatiques

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et à la bande de roulement des pneumatiques.

Selon un mode préférentiel de réalisation de l'invention, la composition de caoutchouc précédemment décrite peut être utilisée dans le pneumatique comme une couche élastomère rigide dans au moins une partie du pneumatique.

Aussi, dans le pneumatique selon la présente invention la composition selon l'invention peut être présente dans au moins une couche choisie parmi une couche interne et la bande de roulement. Selon l'invention, la couche interne peut être choisie dans le groupe constitué par les nappes carcasse, les nappes sommet, les bourrages-tringle, les pieds sommets, les couches de découplage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

L'invention concerne les pneumatiques et produits semi-finis pour pneumatiques précédemment décrits, les articles en caoutchouc, tant à l'état cru (c'est à dire, avant cuisson) qu'à l'état cuit (c'est à dire, après réticulation ou vulcanisation).

### Préparation des compositions de caoutchouc

Les compositions utilisées dans les bandes de roulement de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

Entre 1 et 30 pce de la résine époxyde et entre 1 et 15 pce du durcisseur aminé peuvent être introduits, indépendamment l'un de l'autre, soit durant la phase non-productive (a), soit durant la phase productive (c). De préférence, la résine époxyde est introduite lors de la phase non productive (a) et le durcisseur lors de la phase productive (c).

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante, et éventuellement entre 1 et 20 pce d'une résine époxyde et entre 1 et 15 pce d'un durcisseur aminé), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

### EXEMPLES

### I. Mesures et tests utilisés

### I.1 Temps de grillage

Les mesures sont effectuées à 130°C ou 115°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

On rappelle que, de manière bien connue de l'homme du métier, plus l'indice consistométrique en fonction du temps est élevé, plus la réticulation du matériau sera retardée avant cuisson.

### I.2 Plasticité Mooney

On utilise un consistomètre oscillant tel que décrit dans la norme française NF T 43-005 (1991). La mesure de plasticité Mooney se fait selon le principe suivant : la composition à l'état cru (*i*.*e*., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=O, 83 Newton.mètre).

On rappelle que, de manière bien connue de l'homme du métier, plus la plasticité Mooney est faible, plus le matériau est facile à travailler. Bien entendu, en-deçà d'une certaine valeur (*e*.*g*., 20 UM, le matériau devient trop liquide pour être utilisable, notamment pour fabriquer des couches internes.

### I.3 Propriétés dynamiques

Les propriétés dynamiques G*(2%) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique G*. Pour le cycle retour, on indique le module complexe de cisaillement dynamique G*(2%) à 2% de déformation, à 40°C.

On rappelle que la valeur de G*(2%) retour à 40°C est représentative de la rigidité du matériau : plus G*(2%) à 40°C est élevé, plus le matériau est rigide.

### II. Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante, entre 1 et 30 pce de la résine époxyde, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur type sulfénamide et entre 1 et 15 pce du durcisseur aminé, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### III. Essais de compositions de caoutchouc

Onze compositions de caoutchouc ont été préparées comme indiqué précédemment, sept conformes à l'invention (notées ci-après C.5 à C.11) et quatre non conformes (composition témoin notée ci-après C.1 à C.4). Leurs formulations (en pce) et leurs propriétés ont été résumées dans le tableau 1 ci-après.

A l'exception de la composition témoin C.1, les compositions présentées dans ce tableau 1 n'engendrent pas la formation de formaldéhyde lors de la cuisson.

Les compositions C.2 à C.11 contiennent une résine époxyde (deux résines différentes ont été testées) et un durcisseur polyaminé en remplacement du couple résine formo-phénolique / durcisseur(s) HMT contenu dans la composition témoin conventionnelle C.1. Les compositions C.5 à C.11 conformes à la présente invention contiennent des durcisseurs aminés, différents des durcisseurs aminés des compositions témoin C.2 à C.4.

Les résultats en base du temps de grillage et de G*(2%) sont présentés 100 par rapport à la composition témoin C.1. Les résultats de plasticité Mooney sont présentés en valeur absolue.

**Tableau 1**

| **Constituant** | **C.1** | **C.2** | **C.3** | **C.4** | **C.5** | **C.6** | **C.7** | **C.8** | **C.9** | **C.10** | **C.11** |
|---|---|---|---|---|---|---|---|---|---|---|---|
| NR (1) | 100 | 100 | 100 | 100 | 100 | 100 | 100 | 100 | 100 | 100 | 100 |
| Noir de carbone (2) | 70 | 70 | 70 | 70 | 70 | 70 | 70 | 70 | 70 | 70 | 70 |
| ZnO (3) | 3 | 3 | 3 | 3 | 3 | 3 | 3 | 3 | 3 | 3 | 3 |
| 6PPD (4) | 2.5 | 2.5 | 2.5 | 2.5 | 2.5 | 2.5 | 2.5 | 2.5 | 2.5 | 2.5 | 2.5 |
| Acide stéarique (5) | 2 | 2 | 2 | 2 | 2 | 2 | 2 | 2 | 2 | 2 | 2 |
| Soufre | 3 | 3 | 3 | 3 | 3 | 3 | 3 | 3 | 3 | 3 | 3 |
| CBS (6) | 2 | 2 | 2 | 2 | 2 | 2 | 2 | 2 | 2 | 2 | 2 |
| Résine formoph. (7) | 12 | - | - | - | - | - | - | - | - | - | - |
| HMT (8) | 4 | - | - | - | - | - | - | - | - | - | - |
| Résine époxyde (9) | - | 12 | - | 12 | 12 | 12 | 16 | - | 12 | - | 12 |
| Résine époxyde (10) | - | - | 12 | - | - | - | - | 12 | - | 12 | - |
| Durcisseur témoin (11) | - | 4 | 4 | - | - | - | - | - | - | - | - |
| Durcisseur témoin (12) | - | - | - | 4 | - | - | - | - | - | - | - |
| Durcisseur (13) | - | - | - | - | 4 | - | - | - | - | - | - |
| Durcisseur (14) | - | - | - | - | - | 4 | 4 | 4 | - | - | - |
| Durcisseur (15) | - | - | - | - | - | - | - | - | 4 | 4 | - |
| Durcisseur (16) | - | - | - | - | - | - | - | - | - | - | 4 |
| | | | | | | | | | | | |
| Temps de grillage | 100 | 51 | 87 | 145 | 270 | 177 | 159 | 209 | 125 | 97 | 152 |
| Plasticité Mooney (UM) | 46 | 77 | 79 | 62 | 47 | 39 | 26 | 38 | 31 | 39 | 38 |
| G*(2%) retour à 40°C | 100 | 109 | 103 | 101 | 116 | 102 | 104 | 102 | 98 | 101 | 86 |

| | | | | | | | | | | | |
|---|---|---|---|---|---|---|---|---|---|---|---|
| (1) Caoutchouc Naturel ; (2) Noir de carbone N326 (dénomination selon la norme ASTM D-1765) (3) Oxyde de zinc (grade industriel - société Umicore) (4) N-1,3-diméthylbutyl-N-phénylparaphénylènediamine (Santoflex 6-PPD de la société Flexsys) (5) Stéarine (« Pristerene 4931 » de la société Uniqema) (6) N-cyclohexyl-benzothiazyl sulphénamide(Santocure CBS de la société Flexsys) (7) Résine formophénolique novolac (« Peracit 4536K » de la société Perstorp) (8) Hexaméthylènetétramine (de la société Degussa) (9) Résine époxyde (« DEN 439 » de la société Uniqema) (10) Résine époxyde (« Tris(4-hydroxyphenyl)methane triglycidyl ether » de la société Sigma-Aldrich) (11) 1,3bis(aminométhyl)cyclohexane (de la société Sigma-Aldrich) (12) metaphenylene diamine de la société Sigma-Aldrich (13) « Lonzacure DETDA » de la société Lonza (14) « Ethacure 300 » de la société Albemarle (15) « Lonzacure MDEA » de la société Lonza (16) « Lonzacure MCDEA » de la société Lonza | | | | | | | | | | | |

On note que l'utilisation d'une résine époxyde et un durcisseur polyaminé dans les compositions C.5 à C.11 conformes à la présente invention permet d'obtenir une plasticité Mooney amélioré par rapport au couple résine formo-phénolique / durcisseur(s) HMT de la composition témoin C.1, mais aussi par rapport au couple résine époxyde / durcisseur polyaminé des compositions témoins C.2 à C.4. Par ailleurs, les compositions conformes à la présente invention permettent en outre d'obtenir un temps de grillage amélioré ou au moins équivalent à celui de la composition témoin C.1, tout en conservant une rigidité équivalente à celle des compositions témoins C.1 à C.4.

En résumé, les résultats de ces essais démontrent que l'emploi d'une résine époxyde et d'un durcisseur polyaminé particulier dans les compositions de l'invention, permet d'obtenir des compositions de caoutchouc dont le compromis processabilité / rigidité est bien supérieur à celui d'une composition conventionnelle, ou de compositions comprenant d'autres durcisseurs aminés, non conforme à la présente invention.

Cet essai illustre des compositions de caoutchouc qui peuvent être utilisées en particulier dans des mélanges internes tels les nappes carcasse, les nappes sommet, les bourrages-tringle, les pieds sommets, les couches de découplage, la sous-couche de bande de roulement, notamment dans les nappes carcasses, les nappes sommet, les bourrages-tringle, les pieds sommets, les couches de découplage, la sous-couche de bande de roulement, zones nécessitant une forte rigidité à basse déformation.

## Revendications

1. Composition de caoutchouc à base d'au moins :
- un élastomère diénique ;
- une charge renforçante ;
- un système de réticulation ;
- entre 1 et 30 parties en poids pour cent parties en poids d'élastomère, pce, d'une résine époxyde ;
- entre 1 et 15 pce d'un durcisseur aminé comprenant au moins deux fonctions amines primaires situées sur au moins un cycle aromatique à six atomes, ledit au moins un cycle aromatique à six atomes comportant :
∘ au moins une fonction amine primaire, et
∘ au moins deux radicaux Ri, identiques ou différents, choisis dans le groupe constitué par les radicaux alkyles linéaires ou ramifiés en C1-C6, les halogènes, et les éthers, les amines tertiaires, les thio-éthers, les cétones, les esters et les amides, substitués par des radicaux alkyles linéaires ou ramifiés en C1-C6,
de telle sorte que l'au moins un cycle aromatique à six atomes ne comprenne pas d'atome d'hydrogène situé en position ortho par rapport aux fonctions amines primaires,
ledit durcisseur aminé comprenant au moins une deuxième fonction amine primaire située sur ledit au moins un cycle aromatique à six atomes ou sur un éventuel second cycle aromatique à six atomes dudit durcisseur aminé.

2. Composition de caoutchouc selon la revendication 1, dans laquelle les radicaux Ri, identiques ou différents, sont choisis dans le groupe constitué par les radicaux alkyles linéaires ou ramifiés en C1-C6, les halogènes, et les éthers, les amines tertiaires et les thio-éthers, substitués par des radicaux alkyles linéaires ou ramifiés en C1-C6.

3. Composition de caoutchouc selon la revendication 1 ou 2, dans laquelle les radicaux Ri, identiques ou différents, sont choisis dans le groupe constitué par les radicaux alkyles linéaires ou ramifiés en C1-C6.

4. Composition de caoutchouc selon la revendication 1 ou 2, dans laquelle l'au moins un cycle aromatique à six atomes du durcisseur aminé comprend au moins deux radicaux Ri, identiques ou différents, choisis dans le groupe constitué par les halogènes, et les éthers, les amines tertiaires et les thio-éthers, substitués par des radicaux alkyles linéaires ou ramifiés en C1-C6, et au moins un radical Ri choisi dans le groupe constitué par les radicaux alkyles linéaires ou ramifiés en C1-C6.

5. Composition de caoutchouc selon l'une quelconque des revendications 1 à 4, dans laquelle le durcisseur aminé répond à la formule (I) :

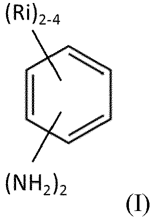

6. Composition selon l'une quelconque des revendications 1 à 4, dans laquelle le durcisseur aminé répond à la formule (II) :

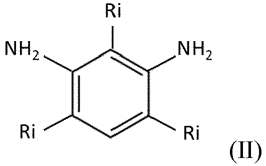

7. Composition de caoutchouc selon l'une quelconque des revendications 1 à 4, dans laquelle le durcisseur aminé répond à la formule (III) : 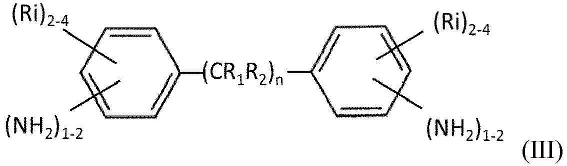 dans laquelle
n représente un entier allant de 0 à 4, de préférence de 1 à 3,
R1 et R2, identiques ou différents, sont choisis dans le groupe constitué par un atome d'hydrogène et un groupement méthyle, éthyle, isobutyle ou benzyle, de préférence R1 et R2 représentent tous les deux un atome d'hydrogène.

8. Composition de caoutchouc selon l'une quelconque des revendications 1 à 4 ou 7, dans laquelle le durcisseur aminé répond à la formule (IV) : 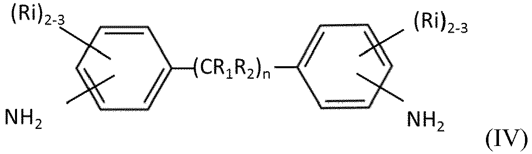 dans laquelle
n représente 1 ou 2, de préférence 1,
R1 et R2, identiques ou différents, sont choisis dans le groupe constitué par un atome d'hydrogène, un groupement méthyle, éthyle, isobutyle ou benzyle, de préférence R1 et R2 représentent tous les deux un atome d'hydrogène.

9. Composition de caoutchouc selon l'une quelconque des revendications 1 à 4, dans laquelle le durcisseur aminé répond à la formule (V) :

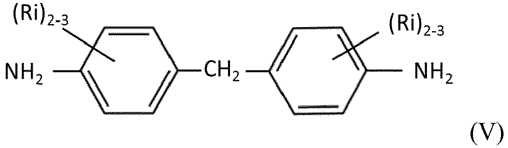

10. Composition de caoutchouc selon l'une quelconque des revendications 1 à 4, dans laquelle le durcisseur aminé est choisi dans le groupe constitué par les composés ci-dessous et les mélanges de ces composés :

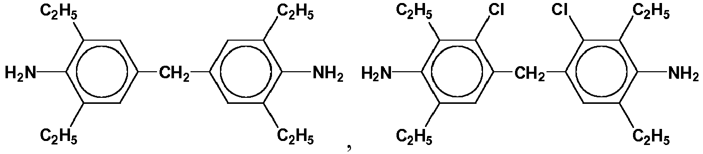

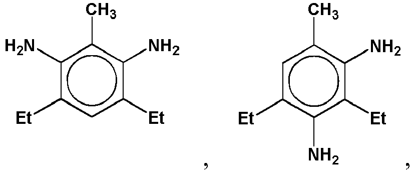

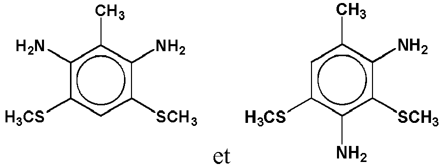

11. Composition de caoutchouc selon l'une quelconque des revendications 1 à 10, dans laquelle le taux de durcisseur aminé est compris dans un domaine allant de 5 à 10 pce.

12. Composition de caoutchouc selon l'une quelconque des revendications 1 à 11, dans laquelle la résine époxyde est choisie dans le groupe constitué par le 2,2 bis[4-(glycidyloxy) phényl] propane, le poly[o-crésylglycidyl éther)-co-formaldéhyde], le poly[phénylglycidyl éther)-co-formaldéhyde], poly[(phenylglycidyl éther)-co(hydroxybenzaldehyde glycidyl éther)] et le mélanges de ces composés.

13. Composition de caoutchouc selon l'une quelconque des revendications 1 à 12, dans laquelle le taux de résine époxyde est compris entre 10 et 25 pce, de préférence entre 15 et 20 pce.

14. Article de caoutchouc finis ou semi-finis comportant une composition de caoutchouc selon l'une quelconque des revendications 1 à 13.

15. Pneumatique comprenant une composition de caoutchouc selon l'une quelconque des revendications 1 à 13.

## Patentansprüche

1. Kautschukzusammensetzung auf Basis von mindestens:
- einem Dienelastomer;
- einem verstärkenden Füllstoff;
- einem Vernetzungssystem;
- zwischen 1 und 30 Gewichtsteilen auf hundert Gewichtsteile Elastomer, phe, eines Epoxidharzes;
- zwischen 1 und 15 phe eines Amin-Härters mit mindestens zwei primären Aminfunktionen, die sich an mindestens einem sechsatomigen aromatischen Ring befinden, wobei mindestens ein sechsatomiger Ring
∘ mindestens eine primäre Aminfunktion und
∘ mindestens zwei Reste Ri, die gleich oder verschieden sind und aus der Gruppe bestehend aus linearen oder verzweigten C₁-C₆-Alkylresten, Halogenen und Ethern, tertiären Aminen, Thioethern, Ketonen, Estern und Amiden, die durch lineare oder verzweigte C₁-C₆-Alkylreste substituiert sind, ausgewählt sind,
derart umfasst, dass der mindestens eine sechsatomige aromatische Ring kein Wasserstoffatom in ortho-Position zu den primären Aminfunktionen umfasst,
wobei der Amin-Härter mindestens eine zweite primäre Aminfunktion umfasst, die sich an dem mindestens einen sechsatomigen aromatischen Ring oder an einem eventuellen zweiten sechsatomigen aromatischen Ring des Amin-Härters befindet.

2. Kautschukzusammensetzung nach Anspruch 1, wobei die Reste Ri gleich oder verschieden sind und aus der Gruppe bestehend aus linearen oder verzweigten C₁-C₆-Alkylresten, Halogenen und Ethern, tertiären Aminen und Thioethern, die durch lineare oder verzweigte C₁-C₆-Alkylreste substituiert sind, ausgewählt sind.

3. Kautschukzusammensetzung nach Anspruch 1 oder 2, wobei die Reste Ri gleich oder verschieden sind und aus der Gruppe bestehend aus linearen oder verzweigten C₁-C₆-Alkylresten ausgewählt sind.

4. Kautschukzusammensetzung nach Anspruch 1 oder 2, wobei der mindestens eine sechsatomige aromatische Ring des Amin-Härters mindestens zwei Reste Ri, die gleich oder verschieden sind und aus der Gruppe bestehend aus Halogenen und Ethern, tertiären Aminen und Thioethern, die durch lineare oder verzweigte C₁-C₆-Alkylreste substituiert sind, ausgewählt sind, und mindestens einen Rest Ri, der aus der Gruppe bestehend aus linearen oder verzweigten C₁-C₆-Alkylresten ausgewählt ist, umfasst.

5. Kautschukzusammensetzung nach einem der Ansprüche 1 bis 4, wobei der Amin-Härter der Formel (I) entspricht:

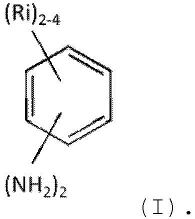

6. Zusammensetzung nach einem der Ansprüche 1 bis 4, wobei der Amin-Härter der Formel (II) entspricht:

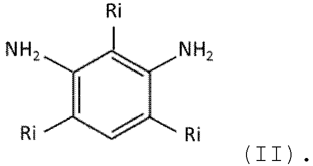

7. Kautschukzusammensetzung nach einem der Ansprüche 1 bis 4, wobei der Amin-Härter der Formel (III) entspricht: 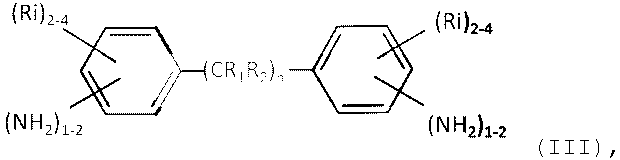 in der
n für eine ganze Zahl im Bereich von 0 bis 4 und vorzugsweise von 1 bis 3 steht,
R₁ und R₂ gleich oder verschieden sind und aus der Gruppe bestehend aus einem Wasserstoffatom und einer Methyl-, Ethyl-, Isobutyl- oder Benzylgruppe ausgewählt sind und R₁ und R₂ vorzugsweise beide für ein Wasserstoffatom stehen.

8. Kautschukzusammensetzung nach einem der Ansprüche 1 bis 4 oder 7, wobei der Amin-Härter der Formel (IV) entspricht: 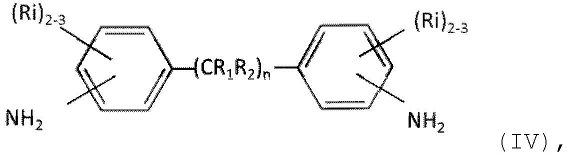 in der
n für 1 oder 2, vorzugsweise 1, steht,
R₁ und R₂ gleich oder verschieden sind und aus der Gruppe bestehend aus einem Wasserstoffatom und einer Methyl-, Ethyl-, Isobutyl- oder Benzylgruppe ausgewählt sind und R₁ und R₂ vorzugsweise beide für ein Wasserstoffatom stehen.

9. Kautschukzusammensetzung nach einem der Ansprüche 1 bis 4, wobei der Amin-Härter der Formel (V) entspricht:

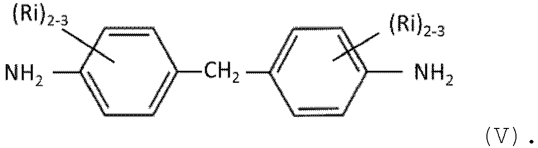

10. Kautschukzusammensetzung nach einem der Ansprüche 1 bis 4, wobei der Amin-Härter aus der Gruppe bestehend aus den nachstehenden Verbindungen und Mischungen dieser Verbindungen ausgewählt ist:

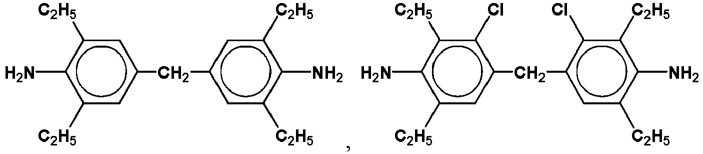

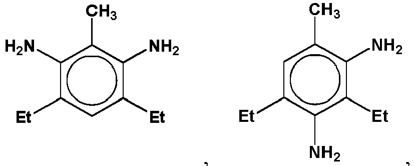

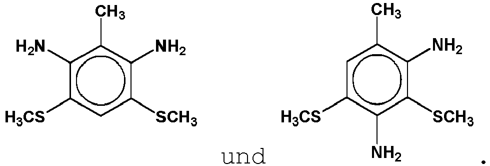

11. Kautschukzusammensetzung nach einem der Ansprüche 1 bis 10, wobei der Gehalt an Amin-Härter in einem Bereich von 5 bis 10 phe liegt.

12. Kautschukzusammensetzung nach einem der Ansprüche 1 bis 11, wobei das Epoxidharz aus der Gruppe bestehend aus 2,2-Bis[4-(glycidyloxy)phenyl]-propan, Poly[(o-kresylglycidylether)-co-formaldehyd], Poly[(phenylglycidylether)-co-formaldehyd], Poly[(phenylglycidylether)-co-(hydroxy-benzaldehydglycidylether)] und Mischungen dieser Verbindungen ausgewählt ist.

13. Kautschukzusammensetzung nach einem der Ansprüche 1 bis 12, wobei der Gehalt an Epoxidharz zwischen 10 und 25 phe, vorzugsweise zwischen 15 und 20 phe, liegt.

14. Kautschuk-Fertigartikel oder -Halbzeug, umfassend eine Kautschukzusammensetzung nach einem der Ansprüche 1 bis 13.

15. Reifen, umfassend eine Kautschukzusammensetzung nach einem der Ansprüche 1 bis 13.

## Claims

1. Rubber composition based on at least:
- a diene elastomer;
- a reinforcing filler;
- a crosslinking system;
- between 1 and 30 parts by weight, per hundred parts by weight of elastomer, phr, of an epoxy resin;
- between 1 and 15 phr of an amine-comprising hardener comprising at least two primary amine functional groups located on at least one six-membered aromatic ring, the said at least one six-membered aromatic ring comprising:
∘ at least one primary amine functional group, and
∘ at least two Ri radicals, which are identical or different, selected from the group consisting of linear or branched C₁-C₆ alkyl radicals, halogens, and ethers, tertiary amines, thioethers, ketones, esters and amides, substituted by linear or branched C₁-C₆ alkyl radicals,
so that the at least one six-membered aromatic ring does not comprise a hydrogen atom located in the ortho position with respect to the primary amine functional groups,
the said amine-comprising hardener comprising at least one second primary amine functional group located on the said at least one six-membered aromatic ring or on a possible second six-membered aromatic ring of the said amine-comprising hardener.

2. Rubber composition according to Claim 1, in which the Ri radicals, which are identical or different, are selected from the group consisting of linear or branched C₁-C₆ alkyl radicals, halogens, and ethers, tertiary amines and thioethers, substituted by linear or branched C₁-C₆ alkyl radicals.

3. Rubber composition according to Claim 1 or 2, in which the Ri radicals, which are identical or different, are selected from the group consisting of the linear or branched C₁-C₆ alkyl radicals.

4. Rubber composition according to Claim 1 or 2, in which the at least one six-membered aromatic ring of the amine-comprising hardener comprises at least two Ri radicals, which are identical or different, selected from the group consisting of halogens, and ethers, tertiary amines and thioethers, substituted by linear or branched C₁-C₆ alkyl radicals, and at least one Ri radical selected from the group consisting of linear or branched C₁-C₆ alkyl radicals.

5. Rubber composition according to any one of Claims 1 to 4, in which the amine-comprising hardener corresponds to the formula (I):

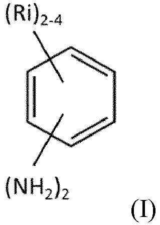

6. Rubber composition according to any one of Claims 1 to 4, in which the amine-comprising hardener corresponds to the formula (II):

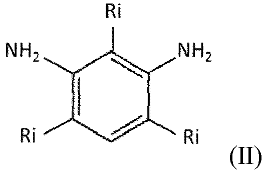

7. Rubber composition according to any one of Claims 1 to 4, in which the amine-comprising hardener corresponds to the formula (III): 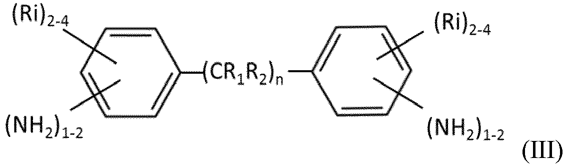 in which:
n represents an integer ranging from 0 to 4, preferably from 1 to 3,
R₁ and R₂, which are identical or different, are selected from the group consisting of a hydrogen atom and a methyl, ethyl, isobutyl and benzyl group; preferably, R₁ and R₂ both represent a hydrogen atom.

8. Rubber composition according to any one of Claims 1 to 4 or 7, in which the amine-comprising hardener corresponds to the formula (IV): 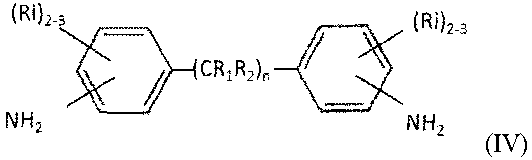 in which:
n represents 1 or 2, preferably 1,
R₁ and R₂, which are identical or different, are selected from the group consisting of a hydrogen atom and a methyl, ethyl, isobutyl and benzyl group; preferably, R₁ and R₂ both represent a hydrogen atom.

9. Rubber composition according to any one of Claims 1 to 4, in which the amine-comprising hardener corresponds to the formula (V):

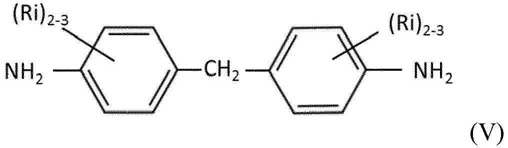

10. Rubber composition according to any one of Claims 1 to 4, in which the amine-comprising hardener is selected from the group consisting of the compounds below and the mixtures of these compounds:

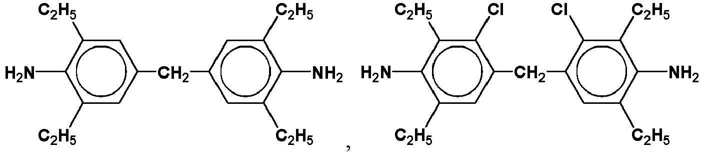

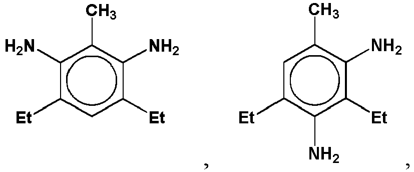

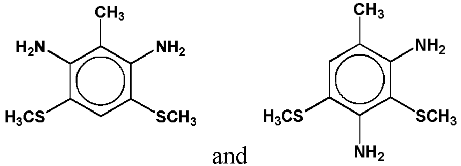

11. Rubber composition according to any one of Claims 1 to 10, in which the content of amine-comprising hardener is within a range extending from 5 to 10 phr.

12. Rubber composition according to any one of Claims 1 to 11, in which the epoxy resin is selected from the group consisting of 2,2-bis[4-(glycidyloxy)phenyl]propane, poly[(o-cresyl glycidyl ether)-co-formaldehyde], poly[(phenyl glycidyl ether)-co-formaldehyde], poly[(phenyl glycidyl ether)-co-(hydroxybenzaldehyde glycidyl ether)] and the mixtures of these compounds.

13. Rubber composition according to any one of Claims 1 to 12, in which the content of epoxy resin is between 10 and 25 phr, preferably between 15 and 20 phr.

14. Finished or semi-finished rubber article comprising a rubber composition according to any one of Claims 1 to 13.

15. Tyre comprising a rubber composition according to any one of Claims 1 to 13.
